(19) Europäisches Patentamt
European Patent Office
Office européen des brevets

(11) **EP 3 511 733 A2**

(12) **EUROPÄISCHE PATENTANMELDUNG**

(43) Veröffentlichungstag:
**17.07.2019 Patentblatt 2019/29**

(51) Int Cl.:
***G01S 7/295*** (2006.01)   ***G01S 13/60*** (2006.01)
***G01S 13/72*** (2006.01)   ***G01S 13/87*** (2006.01)
***G01S 13/93*** (2006.01)   ***G01S 13/42*** (2006.01)
***G01S 13/89*** (2006.01)   *G01S 13/34* (2006.01)

(21) Anmeldenummer: **18193844.0**

(22) Anmeldetag: **11.09.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **12.01.2018   DE 102018000880**

(71) Anmelder: **ZF Friedrichshafen AG**
**88046 Friedrichshafen (DE)**

(72) Erfinder:
- **Walter, Michael**
  **9435 Heerbrugg (CH)**
- **Sick, Benjamin**
  **88131 Bodolz (DE)**
- **Zechner, Stefan**
  **88138 Weißensberg (DE)**

(54) **RADARBASIERTE LÄNGS- UND QUERREGELUNG**

(57)    Die Erfindung stellt einen Radar (10) zur Simulation einer Bewegung eines Straßenfahrzeuges (1) bereit mit einer Anordnung (11) von Empfangsantennen (12), um Empfangssignale (13) eines mit Sendesignalen (14) angestrahlten Referenzobjekts (2) zu empfangen, und einer Auswerteeinrichtung (15), die ausgeführt ist, anhand der Empfangssignale (13) und der Sendesignale (14) den Abstand (dR) des Referenzobjekts (2) zu dem Radar (10) zu erhalten und anhand von mit den Empfangsantennen (12) empfangenen Zielsignalen (16) Winkel (17) zwischen Zielobjekten (18), die in dem Abstand (dR) zu dem Radar (10) angeordnet sind, und dem Radar (10) zu bestimmen und anhand dieser Winkel (17) eine Umgebungskarte (19) zu erhalten, wobei die Auswerteeinrichtung (15) ausgeführt ist, eine Bewegung des Straßenfahrzeuges (1) durch eine Koordinatentransformation dieser Umgebungskarte (19) zu simulieren. Die Erfindung stellt des Weiteren Verfahren zur Simulation einer Bewegung eines Straßenfahrzeuges (1), ein Verfahren zum Trainieren eines künstlichen neuronalen Netzwerks (24) zur Fahrzeugregelung, ein Einsatzsystem (30) für eine Fahrzeugregelung und ein Radar (10) mit einem erfindungsgemäßen Einsatzsystem (30) bereit.

Fig. 7

**Beschreibung**

Die Erfindung betrifft ein Radar zur Simulation einer Bewegung eines Straßenfahrzeuges nach Anspruch 1, ein Verfahren zur Simulation einer Bewegung eines Straßenfahrzeuges nach Anspruch 10, ein Trainingssystem für eine Fahrzeugregelung nach Anspruch 11, ein Verfahren zum Trainieren eines künstlichen neuronalen Netzwerks zur Fahrzeugregelung nach Anspruch 15, ein Einsatzsystem für eine Fahrzeugregelung nach Anspruch 17 und ein Radar mit einem erfindungsgemäßen Einsatzsystem nach Anspruch 18.

Bekannte radarbasierte Adaptive/Autonomous Cruise Control (ACC) Systeme folgen einer vordefinierten Signalverarbeitungskette und modellieren oder reagieren auf vordefinierte Szenarien. Dabei wird in einem ersten Schritt eine Range Doppler Karte berechnet, aus der Maxima extrahiert werden. Azimut- und Elevationswinkel der Ziele werden mittels Beamforming bestimmt und über die Zeit getrackt. Aus Controller Area Network (CAN) basierter Gierrate und der lateralen Ablage von voraus- oder entgegenkommender Fahrzeuge kann der Fahrbahnverlauf prädiziert und Aktionen, wie z.B. Beschleunigen oder Abbremsen, abgeleitet werden.

Im Stand der Technik werden Deep Neural Networks (DNN) erfolgreich in der videobasierten Szensegmentierung eingesetzt. Eine endliche Anzahl von Videosequenzen wird händisch vollständig gelabelt, das heißt einzelne Objekte mit Merkmalen versehen und entsprechenden Objektklassen zugeordnet. Zum Beispiel werden Fahrzeuge, Fußgänger, Straßen, Schilder, Himmel, Bäume oder Fußwege entsprechend klassifiziert. Mit diesen Labeln wird ein Netzwerk trainiert, welches sowohl die Objektcharakteristika, wie beispielsweise die Textur und/oder Farbe, als auch ihre räumliche Relation zueinander lernen kann. Zum Beispiel kann ein Netzwerk lernen, dass sich eine Straße unter einem Fahrzeug befindet, oder dass sich ein Baum oder ein Schild neben der Straße befindet.

Deep Neural Networks können beliebige Eingangsdaten auf beliebige Ausgangsdaten abbilden. Sie können ein globales Szenenverständnis aufbauen und latente Zusammenhänge implizit lernen. Hierfür benötigen Deep Neural Networks jedoch eine sehr große Anzahl an Trainingsdaten, die bei einem bildgebenden Radar händisch nicht mehr zu erbringen sind.

Hier setzt die Erfindung an. Der Erfindung hat die Aufgabe zugrunde gelegen, Soll- und Fehler-Trainingsdaten mit einem Radar automatisch zu erzeugen und ein künstliches neuronales Netzwerk mit diesen Daten zu trainieren. Insbesondere sollen SollTrainingsdaten mit einem menschlichen Fahrer und dessen Fahrverhalten bereitgestellt werden. Da sich durch einen Fahrer, der gemäß den Regeln einer Straßenverkehrsordnung fährt, jedoch nur Soll-Trainingsdaten generieren lassen, hat der Erfindung auch die Aufgabe zugrunde gelegen, Fehler-Trainingsdaten zu simulieren.

Diese Aufgabe wird gelöst mit einem Radar mit den Merkmalen des Anspruchs 1, einem Verfahren mit den Merkmalen des Anspruchs 10, einem Trainingssystem mit den Merkmalen des Anspruchs 11, einem Verfahren zum Trainieren eines künstlichen neuronalen Netzwerks mit den Merkmalen des Anspruchs 15, einem Einsatzsystems für eine Fahrzeugregelung mit den Merkmalen des Anspruchs 17 und mit einem Radar mit den Merkmalen des Anspruchs 18.

Vorteilhafte Ausgestaltungen und Weiterbildungen der Erfindung sind in den Unteransprüchen angegeben.

Der erfindungsgemäße Radar zur Simulation einer Bewegung eines Straßenfahrzeuges weist eine Anordnung von Empfangsantennen auf, die ausgeführt sind, Empfangssignale eines mit Sendesignalen angestrahlten Referenzobjekts zu empfangen. Außerdem weist der Radar eine Auswerteeinrichtung auf, die ausgeführt ist, anhand eines Vergleichs der Empfangssignale und der Sendesignale den Abstand des Referenzobjekts zu dem Radar zu erhalten und anhand von mit den Empfangsantennen empfangenen Zielsignalen Winkel zwischen Zielobjekten, die in dem Abstand zu dem Radar angeordnet sind, und dem Radar zu bestimmen und anhand dieser Winkel eine Umgebungskarte zu erhalten, wobei die Auswerteeinrichtung ausgeführt ist, eine Bewegung des Straßenfahrzeuges durch eine Koordinatentransformation dieser Umgebungskarte zu simulieren.

Radar ist die Abkürzung für Radio Detection and Ranging und bezeichnet Erkennungs- und Ortungsverfahren auf der Basis elektromagnetischer Wellen im Radiofrequenzbereich. Der Radiofrequenzbereich umfasst Frequenzen unterhalb 3000 GHz, also Langwellen ab 30 kHz, Mittelwelle, Kurzwellen und Ultrakurzwelle bis 300 MHz. Ein Radar wird neben einer Kamera oder einem Lidar als Umfelderfassungssensor eines Fahrerassistenzsystems verwendet.

In der Industrie und besonders im Automotive Bereich kommen Radarsensoren zum Einsatz.

Ein Radar und ein Radarsensor weist mehrere Sende- und Empfangsantennen auf.

Empfangssignale sind Signale, die der Radar empfängt. Sendesignale sind Signale, die der Radar abstrahlt.

Eine Antenne ist eine technische Vorrichtung zum Senden und Empfangen elektromagnetischer Wellen. Die Sendeantennen können nacheinander, beispielsweise mittels time domain multiplexing, oder gleichzeitig senden. Bei einer Phased Array Antenne, die eine spezielle Gruppenantenne aus mehreren Sendeantennen ist, können einzelne Sendeantennen mit unterschiedlicher Phasenlage gespeist werden. Im Resultat kann die resultierende, gemeinsam abgestrahlte Welle elektronisch in eine beliebige Raumrichtung, abhängig von der Phasenlage, geschwenkt werden.

Der Abstand des Referenzobjekts zu dem Radar wird z.B. dadurch bestimmt, dass der Radar Sendesignale mit einer ansteigenden Frequenzrampe in schneller Abfolge aussendet und diese Sendesignale mit den korrespondierenden Empfangssignalen vergleicht. Durch einen Frequenzunterschied zwischen den Sende- und Empfangssignalen kann auf den Abstand des Referenzobjekts zu dem Radar geschlossen werden. Dieses Verfahren ist als Frequency Modulated Continuous Wave (FMCW) Verfahren bekannt.

Winkel zwischen Zielobjekten in diesem Abstand und dem Radar werden mit der Direction of Arrival (DOA) Methode bestimmt, die darauf beruht, dass Empfangssignale der Empfangsantennen der Anordnung einen Phasenunterschied aufweisen. Ein Beispiel für einen DOA Algorithmus ist das bekannte Beamforming, bei dem für ein Gitter aus möglichen Winkeln die Summe aller Empfangssignale mit den entsprechenden Phasenkorrekturen gebildet wird. Damit können mehrere Zielobjekte in gleichem Abstand zum Radar, und mit gleicher Geschwindigkeit, aber mit unterschiedlicher DOA erkannt werden.

Straßenfahrzeuge sind alle Fahrzeuge, die auf dem Land fahren. Zum Beispiel ist ein PKW; LKW oder NKW ein Straßenfahrzeug.

Eine Auswerteeinrichtung ist eine Vorrichtung, die eingehende Informationen verarbeitet und ein aus dieser Verarbeitung resultierendes Ergebnis ausgibt. Insbesondere ist eine Auswerteeinrichtung eine elektronische Schaltung, wie z.B. eine zentrale Prozessoreinheit oder ein Grafikprozessor.

Eine Karte ist eine Darstellung eines räumlichen Gebildes. Eine Umgebungskarte stellt die Umgebung bezogen auf ein Bezugsobjekt dar.

Eine Koordinatentransformation ist eine Umwandlung von ursprünglichen Koordinaten in neue Koordinaten.

Die Erfindung hat den Vorteil, dass eine Bewegung des Straßenfahrzeuges aus Aufnahmen eines einzelnen Radars oder eines einzelnen Radarsensors simuliert werden kann. Eine zusätzliche Vorrichtung zur Simulation einer Bewegung eines Straßenfahrzeuges ist nicht erforderlich. Dies ist besonders dann vorteilhaft, wenn ein Fahrzeug als Umfelderfassungssensor eines Fahrerassistenzsystems einen Radarsensor aufweist, mit dem dann neben der Erfassung der Umwelt auch eine Bewegung des Fahrzeuges in der Umwelt simuliert werden kann.

Vorteilhafterweise ist die Anordnung der Empfangsantennen eine mehrdimensionale Anordnung und die Auswerteeinrichtung ist ausgeführt, Azimut- und Elevationswinkel von Zielobjekten, die in dem Abstand zu dem Radar angeordnet sind, zu bestimmen, wobei die Umgebungskarte eine Azimut- und Elevationskarte ist.

Bereits mit einer zweidimensionalen Anordnung der Empfangsantennen lässt sich die Richtung eines Ziels durch Auswertung der Lauflängenunterschiede und Phasenverschiebungen der Empfangssignale bestimmen und folglich die exakte dreidimensionale Position.

In Kugelkoordinaten wird ein Objekt im Raum durch dessen Abstand vom Ursprung und zwei Winkeln angegeben.

Der Azimutwinkel ist der Winkel zwischen einer ersten Bezugsrichtung des Koordinatensystems und der Orthogonal Projektion der Strecke zwischen dem Objekt und dem Koordinatenursprung in die Ebene, die von der ersten Bezugsrichtung und einer zweiten, zu der ersten Bezugsrichtung orthogonal angeordneten, Bezugsrichtung aufgespannt wird. Der Azimutwinkel wird gezählt von Null bis $2\pi$.

Der Elevationswinkel ist der Winkel zwischen der Polrichtung und der Strecke zwischen dem Objekt und dem Koordinatenursprung. Der Elevationswinkel wird gezählt von 0 bis $\pi$.

Ein vollständiger Durchlauf des Azimut Winkels und des Elevationswinkels ergibt eine Kugeloberfläche mit einem gegebenen Radius.

Bevorzugt ist die Auswerteeinrichtung ausgeführt, eine Rotation des Straßenfahrzeuges durch eine Rotation der Umgebungskarte mittels einer Änderung in Azimut- und/oder Elevationswinkel zu simulieren.

Eine Rotation ist eine Umwandlung, bei der das neue Koordinatensystem gegenüber dem alten Koordinatensystem um den Koordinatenursprung herum um einen gegebenen Rotationswinkel gedreht ist. Beispielsweise entspricht eine Rotation der Umgebungskarte gegen den Uhrzeigersinn um 90°, also um einen Azimutwinkel von $\pi/2$, einer Rotation des Fahrzeuges im Uhrzeigersinn um 90°.

In einer bevorzugten Ausführung der Erfindung ist die Auswerteeinrichtung ausgeführt, mittels Beamforming Winkel von Zielobjekten zu bestimmen.

Beamforming ist eine spezielle Direction of Arrival Methode, bei der man durch alle Raumwinkel geht und die Summe über die Vektoren der Empfangssignale berechnet. Die Maxima dieser Summe korrespondieren mit den Raumwinkeln der Zielobjekte.

Bevorzugt ist die Auswerteeinrichtung ausgeführt, Abstände mehrerer Referenzobjekte zu dem Radar zu erhalten, und für jeden dieser Abstände eine Umgebungskarte zu erhalten. Zu jedem Abstand wird also eine Kugeloberfläche mit darauf befindenden Zielobjekten erhalten.

In einer Weiterentwicklung der Erfindung ist die Auswerteeinrichtung ausgeführt, eine Translation der Straßenfahrzeuge durch eine Translation aus einer ersten Umgebungskarte zu einem ersten Abstand in eine zweite Umgebungskarte zu einem zweiten Abstand zu simulieren. Mit Rotation und einer Translation kann eine beliebige Bewegung des Straßenfahrzeuges simuliert werden.

Vorteilhafterweise ist die Auswerteeinrichtung ausgeführt, anhand eines Vergleichs der Empfangssignale und der Sendesignale die Relativgeschwindigkeit eines Referenzobjekts und/oder eines Zielobjekts im Ruhesystem des Radars zu erhalten. Dabei nutzt die Auswerteeinrichtung den Doppler Effekt. Eine Doppler Verschiebung der Frequenz der Empfangssignale und Sendesignale ergibt dann die Relativgeschwindigkeit.

Vorzugsweise erzeugt der Radar, z.B. mit einem entsprechendem Algorithmus, eine Range Doppler Karte aus den Empfangssignalen. Eine Range Doppler Karte gibt die Entfernung eines Objekts zu dem Radar und die Relativgeschwindigkeit des Objekts zu dem Radar an. In der Range Doppler Karte kann mittels dem Constant False Alarm Rate (CFAR) Algorithmus nach lokalen Maxima gesucht werden. Der CFAR Algorithmus benutzt einen Schwellenwert, das heißt einen Wert, der festlegt, bis zu welcher Amplitude ein Rauschen begrenzt wird, der adaptiv ist, zum Beispiel wird der Schwellenwert aus den Nachbarantennen der momentan betrachteten Antenne bestimmt.

Der erfindungsgemäße Radar kann dann zu jedem Punkt der Range Doppler Karte, insbesondere zu jedem Maximum, eine vollständige Azimut- und Elevationskarte, z.B. durch Beamforming, berechnen. Zu jedem Abstand und zu jeder Relativgeschwindigkeit wird also eine Kugeloberfläche mit darauf befindenden Zielobjekten erhalten. Damit können auch sich bewegende Objekte erfasst werden.

Neben Abstand, Geschwindigkeit, Azimut- und Elevationswinkel kann zu jedem Maximum auch die entsprechende Intensität bestimmt werden. Werden als Beispiel 100 Range-Doppler Maxima gefunden und werden jeweils im Durchschnitt zwei Maxima in verschiedenen Winkeln gefunden, ergibt sich als Ergebnis eine Liste mit 200 Zielen mit jeweils fünf Werten. Diese Liste hängt von den jeweiligen Maxima-Suchalgorithmen ab.

In einer Weiterbildung der Erfindung ist die Auswerteeinrichtung ausgeführt, eine Fehlerbewegung des Straßenfahrzeuges zu simulieren. Damit lassen sich Fehlerbewegungen ohne zusätzliche Sensoren direkt aus den Radardaten gewinnen. Mit simulierten Fehlerbewegungen kann ein künstliches neuronales Netzwerk lernen auf Fehler zu reagieren.

Vorzugsweise ist der Radar ein frequenzmodulierter Dauerstrichradar, der vorzugsweise an das Straßenfahrzeug anordenbar ist.

Ein frequenzmodulierter Dauerstrichradar ist ein spezieller Typ von Radarsensor, der wie ein einfaches Dauerstrichradar ein kontinuierliches Sendesignal abstrahlt. Im Gegensatz zu dem einfachen Dauerstrichradar kann ein frequenzmodulierter Dauerstrichradar seine Arbeitsfrequenz während der Messung mittels des Frequency Modulated Continuous Wave Verfahrens ändern. Das heißt, das Sendesignal wird in der Frequenz moduliert. Durch diese Änderung in der Frequenz werden zusätzliche Messmöglichkeiten durch Laufzeitmessungen möglich. Mit Hilfe der Frequenzmodulation des Sendesignals kann ein Zeitbezug zur Messung der Entfernung unbewegter Objekte erzeugt werden. Bei unbewegten Objekten kann eine Eigenbewegung des Fahrzeuges, an dem ein Radarsensor angeordnet ist, in die Berechnung miteinbezogen werden. Bei dieser Methode wird ein Signal ausgesendet, welches sich periodisch in der Frequenz ändert, z.B. ein sägezahnförmiges Signal, ein dreieckförmiges Signal, ein rechteckförmiges Signal oder ein treppenförmiges Signal. Wird ein Echosignal empfangen, dann hat diese Frequenzänderung eine Laufzeitverschiebung.

Das erfindungsgemäße Verfahren zur Simulation einer Bewegung eines Straßenfahrzeuges, zu dessen Durchführung ein erfindungsgemäßer Radar verwendet wird, weist die folgenden Verfahrensschritte auf:

 a) Bereitstellen von Empfangssignalen eines mit Sendesignalen angestrahlten Referenzobjekts,

 b) Erhalten des Abstands des Referenzobjekts zu dem Radar anhand eines Vergleichs der Empfangssignale und der Sendesignale,

 c) Bestimmen von Winkeln von Zielobjekten, die in dem Abstand zu dem Radar angeordnet sind,

 d) Erhalten einer Umgebungskarte anhand dieser Winkel und

 e) Simulation einer Bewegung des Straßenfahrzeuges durch eine Koordinatentransformation dieser Umgebungskarte.

Ein erfindungsgemäßes Trainingssystem für eine Fahrzeugregelung weist eine erste Eingangsschnittstelle auf, um Soll-Trainingsdaten zu erhalten. Ferner weist das Trainingssystem eine zweite Eingangsschnittstelle auf, um Fehler-Trainingsdaten zu erhalten. Dabei sind die Soll-Trainingsdaten Aufnahmen eines Radars und korrespondierende Fahrzeugsteuerungsbefehle des Fahrers während einer Fahrt entlang Sollpositionen und die Fehler-Trainingsdaten sind mit dem Radar simulierte dreidimensionale Aufnahmen von Fehlerbewegungen des Straßenfahrzeuges, wobei diese Aufnahmen jeweils mit einem simulierten Fahrzeugsteuerungsbefehl zum Steuern des Straßenfahrzeuges aus der Fehlerbewegung in eine Sollposition markiert sind. Dabei ist das Trainingssystem ausgeführt, ein künstliches neuronales Netzwerk mit den Soll-Trainingsdaten und den Fehler-Trainingsdaten vorwärts zu speisen und in einer Vorwärtsspeisung einen mit dem künstlichen neuronalen Netzwerk ermittelten Fahrzeugsteuerungsbefehl zu erhalten und Gewichtungsfaktoren durch Rückwärtsspeisen des künstlichen neuronalen Netzwerks mit dem Fehler zwischen ermittelten Fahrzeugsteuerungsbefehle und korrespondierenden Fahrzeugsteuerungsbefehl des Fahrers zu erhalten.

Eine Schnittstelle ist eine Einrichtung zwischen wenigstens zwei Funktionseinheiten, an der ein Austausch von logischen Größen, z.B. Daten oder physikalischen Größen, z.B. elektrischen Signalen, erfolgt, entweder nur unidirektional oder bidirektional. Der Austausch kann analog oder digital erfolgen. Der Austausch kann drahtlos oder drahtgebunden erfolgen. Eine Schnittstelle kann zwischen Software und Software, Hardware und Hardware sowie Software und Hardware und Hardware und Software bestehen.

Soll-Trainingsdaten sind positive Trainingsdaten. Fehler-Trainingsdaten sind negative Trainingsdaten, durch die das künstliche neuronale Netzwerk lernt, auf einen Fehler zu reagieren.

Eine Sollposition ist eine fehlerfrei eingenommene Position. Beispielsweise ist die Sollposition eines Fahrzeuges auf einer Fahrbahn eine Position entlang des mittleren Fahrstreifens.

Ein künstliches neuronales Netzwerk ist ein Algorithmus, der auf einer elektronischen Schaltung ausgeführt wird und am Vorbild des neuronalen Netzwerks des menschlichen Gehirns programmiert ist. Funktionseinheiten eines künstlichen neuronalen Netzwerks sind künstliche Neuronen, deren Output sich im Allgemeinen als Wert einer Aktivierungsfunktion ausgewertet über eine gewichtete Summe der Inputs plus einem systematischen Fehler, dem sogenannten Bias, ergibt. Durch Testen von mehreren vorbestimmten Inputs mit verschiedenen Gewichtungsfaktoren und/oder Aktivierungsfunktionen werden künstliche neuronale Netzwerke, ähnlich dem menschlichen Gehirn, trainiert. Das Trainieren eines künstlichen neuronalen Netzwerks mit Hilfe von vorbestimmten Inputs wird maschinelles Lernen genannt. Eine Teilmenge des maschinellen Lernens ist das tiefgehende Lernen, das sogenannte Deep Learning, bei dem eine Reihe hierarchischer Schichten von Neuronen, sogenannten Hidden Layers, genutzt wird, um den Prozess des maschinellen Lernens durchzuführen. Ein künstliches neuronales Netzwerk mit mehreren Hidden Layers ist ein Deep Neural Network.

Die Fahrzeugsteuerungsbefehle des Fahrers während einer Fahrt entlang Sollpositionen können beispielsweise mit einem CAN-Bus ausgelesen werden.

Durch die Fehler-Trainingsdaten, die mit einem simulierten Fahrzeugsteuerungsbefehl zum Steuern des Straßenfahrzeuges aus der Fehlerbewegung in eine Sollposition markiert sind, müssen keine Fehler-Trainingsdaten händisch mehr markiert werden. Die Fehler-Trainingsdaten werden automatisch zur Verfügung gestellt.

Vorteilhafterweise erfolgt mit dem Trainingssystem eine Spurführung des Straßenfahrzeuges, insbesondere auf einer mehrspurigen Fahrbahn.

Insbesondere ist das Trainingssystem ausgeführt, Spurwechsel als Soll-Trainingsdaten zu ignorieren. Will man ein Fahrzeug auf einer mehrspurigen Fahrbahn innerhalb einer Spur halten, welche nur durch vorausfahrende oder links und rechts versetzt fahrende Fahrzeuge definiert ist, so ist es wichtig zu verhindern, dass ein Spurwechsel in die positive Datenbank, d.h. in die Solltrainingsdaten, aufgenommen wird.

Vorteilhafterweise erkennt das Trainingssystem Spurwechsel durch Auswerten von Blinkersignalen des Straßenfahrzeuges und/oder anhand einer Spurerkennungseinrichtung. Durch Auswerten der Blinkersignale oder einer Kamera mit Spurerkennung kann das Trainingssystem einen Spurwechsel erkennen und die Daten ignorieren. Darüber hinaus kann das System eine durchgezogene Linie erkennen, wobei Verschiebungen in Richtung zur Markierung in den negativen Daten stärker gewichtet werden.

Das erfindungsgemäße Verfahren zum Trainieren eines künstlichen neuronalen Netzwerks, wobei das künstliche neuronale Netzwerk auf einem Trainingssystem zur Fahrzeugregelung ausgeführt wird, weist die folgenden Verfahrensschritte auf:

a) Bereitstellen von während einer Fahrt entlang Sollpositionen gemachten Aufnahmen eines Radars und korrespondierenden Fahrzeugsteuerungsbefehlen des Fahrers während einer Fahrt als Soll-Trainingsdaten,

b) Bereitstellen von mit dem Radar simulierten dreidimensionalen Aufnahmen von Fehlerbewegungen des Straßenfahrzeuges, wobei diese Aufnahmen jeweils mit einem Fahrzeugsteuerungsbefehl zum Steuern des Straßenfahrzeuges aus der Fehlerbewegung in eine Sollposition markiert sind, als Fehler-Trainingsdaten

c) Vorwärtsspeisen des künstlichen neuronalen Netzwerks mit den Soll-Trainingsdaten und den Fehler-Trainingsdaten,

d) Erhalten eines mit dem künstlichen neuronalen Netzwerk ermittelten Fahrzeugsteuerungsbefehl in einer Vorwärtsspeisung,

e) Rückwärtsspeisen des künstlichen neuronalen Netzwerks mit dem Fehler zwischen ermittelten Fahrzeugsteuerungsbefehl und korrespondierenden Fahrzeugsteuerungsbefehl des Fahrers und

f) Erhalten von Gewichtungsfaktoren in einer Rückwärtsspeisung.

Vorzugsweise wird zur Durchführung des Verfahrens ein erfindungsgemäßes Trainingssystem verwendet.

Das erfindungsgemäße Einsatzsystem für eine Fahrzeugregelung weist eine Eingangsschnittstelle auf, um Aufnahmen eines Radars während einer Fahrt mit einem Straßenfahrzeug zu erhalten. Ferner weist das Einsatzsystem eine Auswerteeinrichtung auf, die ausgeführt ist, gemäß dem erfindungsgemäßen Verfahren zum Trainieren eines künstlichen neuronalen Netzwerks trainiertes künstliches neuronales Netzwerk mit diesen Aufnahmen vorwärts zu speisen und Fahrzeugsteuerungsbefehle zu erhalten. Außerdem weist das Einsatzsystem eine Ausgangsschnittstelle auf, die ausgeführt ist, diese Fahrzeugsteuerungsbefehle an eine Fahrzeugregelungseinrichtung auszugeben. Damit wird eine End to End Lösung, insbesondere für ein autonom fahrendes Fahrzeug, bereitgestellt. Als Eingangsdaten für das künstliche neuronale Netzwerks werden beispielsweise mittels Beamforming vollständige Range Doppler Karten und Azimut- und Elevationskarten aus Radaraufnahmen berechnet. Als Ausgangsdaten werden Fahrzeugsteuerungsbefehle ausgegeben. Damit insbesondere eine Drive by Wire Regelung bereitgestellt.

Das erfindungsgemäße Radar weist ein erfindungsgemäßes Einsatzsystem auf.

Die Erfindung wird in den nachfolgenden Figuren ausführlich beschrieben. Es zeigen:

Fig. 1 ein Ausführungsbeispiel eines erfindungsgemäßen Radars,

Fig. 2 ein Ausführungsbeispiel einer Umgebungskarte,

Fig. 3 ein Ausführungsbeispiel einer ersten Umgebungskarte und einer zweiten Umgebungskarte,

Fig. 4 ein Ausführungsbeispiel einer Umgebungskarte mit Zielobjekten,

Fig. 5 ein Ausführungsbeispiel einer simulierten Fehlbewegung,

Fig. 6 ein Ausführungsbeispiel eines erfindungsgemäßen Verfahrens zur Simulation einer Bewegung eines Straßenfahrzeuges,

Fig. 7 ein Ausführungsbeispiel eines erfindungsgemäßen Trainingssystems,

Fig. 8 ein Ausführungsbeispiel eines erfindungsgemäßen Verfahrens zum Trainieren eines künstlichen neuronalen Netzwerks,

Fig. 9 ein Ausführungsbeispiel eines erfindungsgemäßen Einsatzsystems und

Fig. 10 ein Ausführungsbeispiel eines Fahrzeuges mit einem Radar und einem Einsatzsystem.

In den Figuren bezeichnen gleiche Bezugszeichen gleiche oder funktionsähnliche Bezugsteile. In den jeweiligen Figuren sind die jeweils relevanten Bezugsteile entsprechend indiziert.

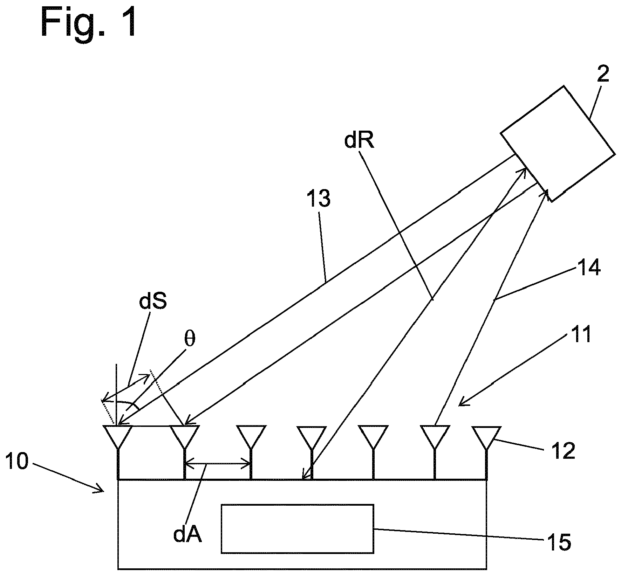

Der in Fig. 1 gezeigte Radar 10 weist eine eindimensionale Anordnung 11 von Empfangsantennen 12 auf. Die Empfangsantennen 12 sind in einem Antennenabstand dA voneinander beabstandet. Ein Referenzobjekt 2 ist in einem Abstand dR zu dem Radar 10 angeordnet. Die Empfangsantennen 12 strahlen Sendesignale 14 auf, die an dem Referenzobjekt 2 reflektiert werden und als Empfangssignale 13 von den Empfangsantennen 12 empfangen werden. In der Näherung einer ebenen Welle, d.h. dass eine Ankunftsrichtung der Empfangssignale 13 nicht von einer Position einer Empfangsantenne 12 in der Anordnung 11 abhängt, hängt der Laufzeitunterschied dS zwischen dem Empfang eines Empfangssignal 13 in einer ersten Empfangsantenne und einer zu der ersten Empfangsantenne 12 benachbarten Empfangsantenne 12 direkt von dem Winkel Θ, unter dem das Referenzobjekt 2 von der Empfangsantenne 12 aus erscheint, und dem Antennenabstand dA ab:

$$dS = dA * \sin \Theta.$$

Der Radar 10 weist eine Auswerteeinrichtung 15 auf, die anhand eines Vergleichs der Empfangssignale 13 und der Sendesignale 14 den Abstand dR des Referenzobjekts zu dem Radar 10 bestimmt. Außerdem berechnet die Auswerteeinrichtung Winkel 17, unter denen Zielobjekte 18 in dem Abstand dR zu dem Radar 10 erscheinen. Aus diesen Winkeln 17 berechnet die Auswerteeinrichtung 15 eine Umgebungskarte 19.

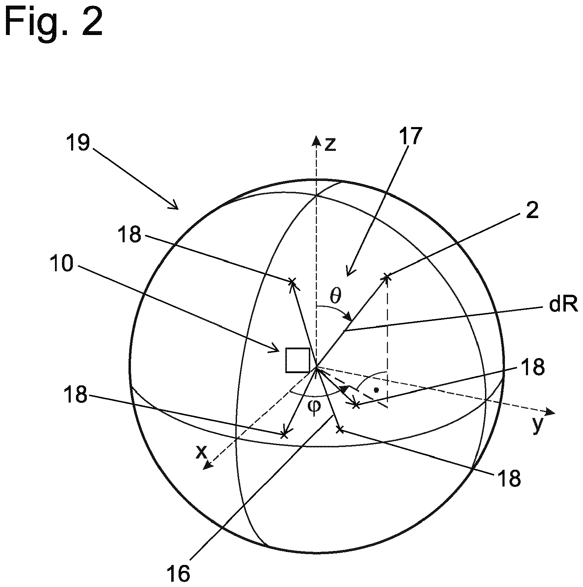

Die Umgebungskarte 19 ist im Detail in Fig. 2 gezeigt. In dem dargestellten Koordinatensystem bildet der Radar 10 den Koordinatenursprung. Das Referenzobjekt 2 befindet sich auf einer Kugeloberfläche mit Radius dR. Das Referenzobjekt 2 hat zu dem Radar 10 den Abstand dR und erscheint unter einem Elevationswinkel 17 und einem Azimut Winkel 17. Mittels der Auswerteeinrichtung wird nun ein Scan, zum Beispiel mittels Beamforming, dieser Kugeloberfläche durchgeführt. Zur Durchführung des Scans kann der Radar eine Auflösung von +/- 15° im Azimutwinkel 17 und +/- 4° im Elevationswinkel aufweisen. Das heißt für festgehaltenen Abstand dR wird der Elevationswinkel 17 von Null bis π durchlaufen und der Azimut Winkel 17 von 0 bis 2π. Dabei werden mittels empfangenen Zielsignalen 16 alle Zielobjekte 18 aufgefunden, die auf dieser Kugeloberfläche angeordnet sind.

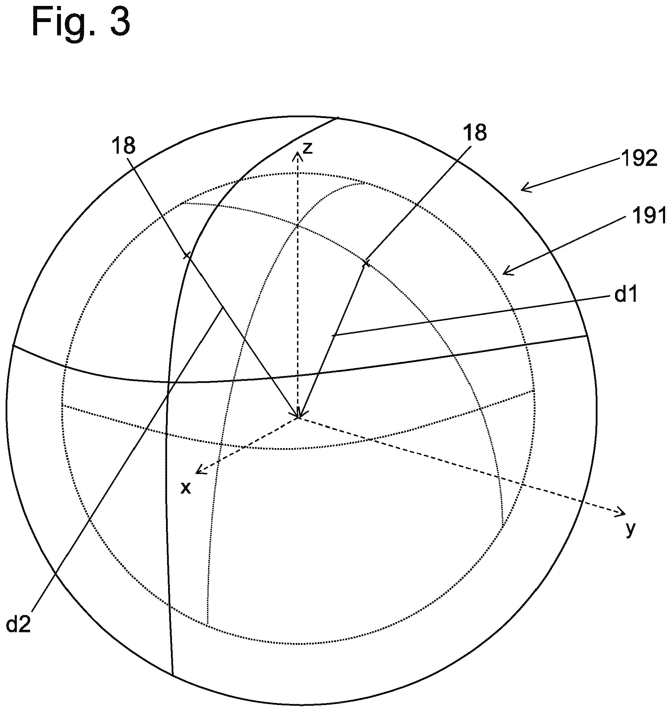

Fig. 3 zeigt eine erste Umgebungskarte 191 und eine zweite Umgebungskarte 192, die mit einem derartigen Scan der Auswerteeinrichtung 15 erhalten wurden. Alle Zielobjekte 18, die sich auf der ersten Umgebungskarte 191 befinden, weisen zu dem Radar 10 den Abstand d1 und eine erste Relativgeschwindigkeit auf, alle Zielobjekte 18, die sich auf der zweiten Umgebungskarte 192 befinden, weisen zu dem Radar den Abstand d2 und eine zweite Relativgeschwindigkeit auf.

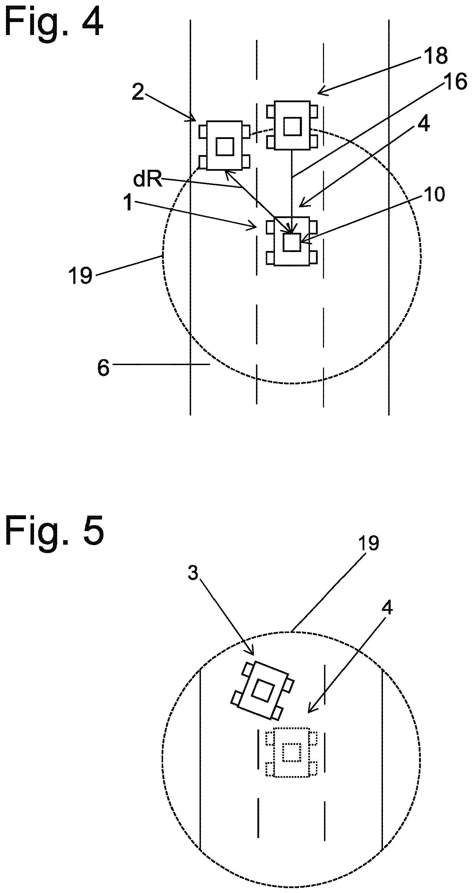

Fig. 4 zeigt den Radar 10 angeordnet an einem Fahrzeug 1. Das Referenzobjekt 2 ist ein Fahrzeug. Eine Sollposition 4 des Straßenfahrzeugs 1 ist die mittlere Position auf dem mittleren Fahrbahnstreifen der Fahrbahn 6. Die Auswerteeinrichtung 15 erstellt eine Umgebungskarte 19. In dieser Umgebungskarte 19 befindet sich als ein Zielobjekt 18 ein weiteres Straßenfahrzeug 1, das über das Zielsignal 16 von der Auswerteeinrichtung 15 wahrgenommen wird.

Fig. 5 stellt eine Fehlerbewegung 3 dar. Diese Fehlerbewegung 3 kann einfach durch eine Translation und Rotation der in Fig. 4 dargestellten Umgebungskarte 19 erhalten werden.

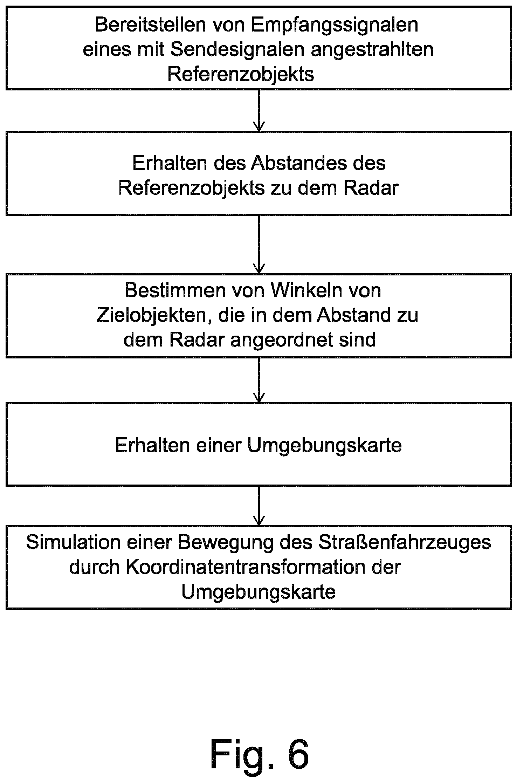

In dem in Fig. 6 gezeigten Verfahren zur Simulation einer Bewegung eines Straßenfahrzeuges 1 werden in einem ersten Schritt Empfangssignale 13 eines mit Sendesignalen 14 angestrahlten Referenzobjekts 2 bereitgestellt. Anschließend wird anhand eines Vergleichs der Empfangssignale 13 und der Sendesignale 14 der Abstand dR des Referenzobjekts 2 zu dem Radar 10 erhalten. Mittels der DOA-Methode, beispielsweise mittels Beamforming, werden Winkel 17 von Zielobjekten 18 bestimmt, die in dem Abstand dR zu dem Radar 10 angeordnet sind, und bei bewegten Zielobjekten eine bestimmte Relativgeschwindigkeit zu dem Radar 10 aufweisen. Aus diesen Winkeln 17 wird eine Umgebungskarte 19 erhalten, in der eine Bewegung des Straßenfahrzeuges 1 simuliert wird.

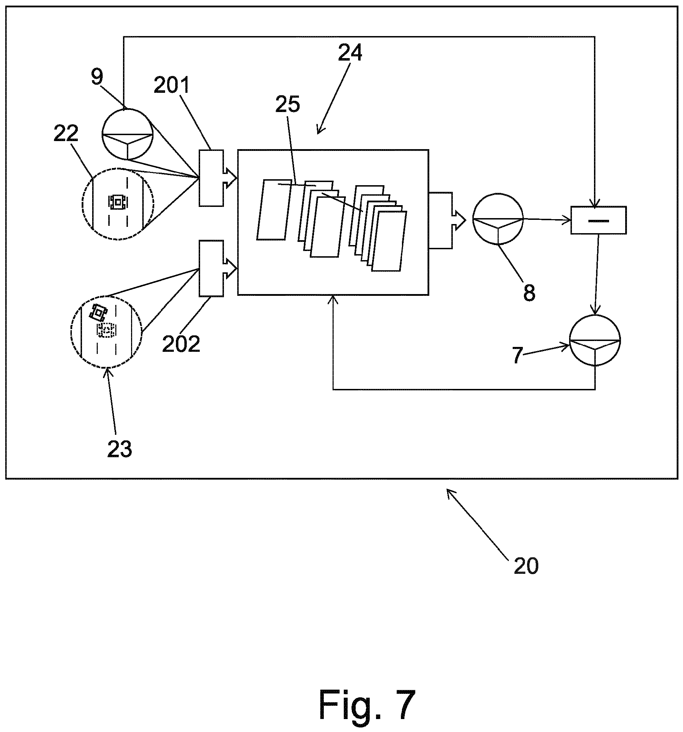

Das in Fig. 7 gezeigte Trainingssystem 20 weist eine erste Eingangsschnittstelle 201 und eine zweite Eingangsschnittstelle 202 auf. Die erste Eingangsschnittstelle 201 gibt Soll-Trainingsdaten 22, d.h. Radaraufnahmen einer Fahrzeugbewegung entlang Sollpositionen 4, und Fahrzeugsteuerungsbefehle 9 des Fahrers während einer Fahrt entlang Sollpositionen 4 als Eingangsdaten in ein künstliches neuronales Netzwerk 24 ein. Die zweite Schnittstelle 202 gibt Fehler-Trainingsdaten 23 in das künstliche neuronale Netzwerk ein. Das künstliche neuronale Netzwerk 24 kann insbesondere ein Convolutional Neural Network sein. Derartige Netzwerke sind vergleichbar mit normalen künstlichen neuronalen Netzwerken, mit dem Unterschied, dass aufeinanderfolgende Schichten nicht voll verbunden sind, sondern über einen Kernel einer Konvolution. Eine Konvolution, auch Faltung genannt, ist ein Operator, der für zwei Funktionen eine dritte Funktion liefert. Die Soll-Trainingsdaten 22 und die Fehler-Trainingsdaten 23 werden durch das künstliche neuronale Netzwerk 24 vorwärts gespeist. Der Output des künstlichen neuronalen Netzwerks 24 ist ein berechneter Fahrzeugsteuerungsbefehl 8, der über eine logische Schaltung mit dem Fahrzeugsteuerungsbefehl 9 des Fahrers verglichen wird, um einen Fehler 7 zu erhalten. Mit diesem Fehler 7 wird das künstliche neuronale Netzwerk 24 rückwärts gespeist, um Gewichtungsfaktoren 25 zu optimieren.

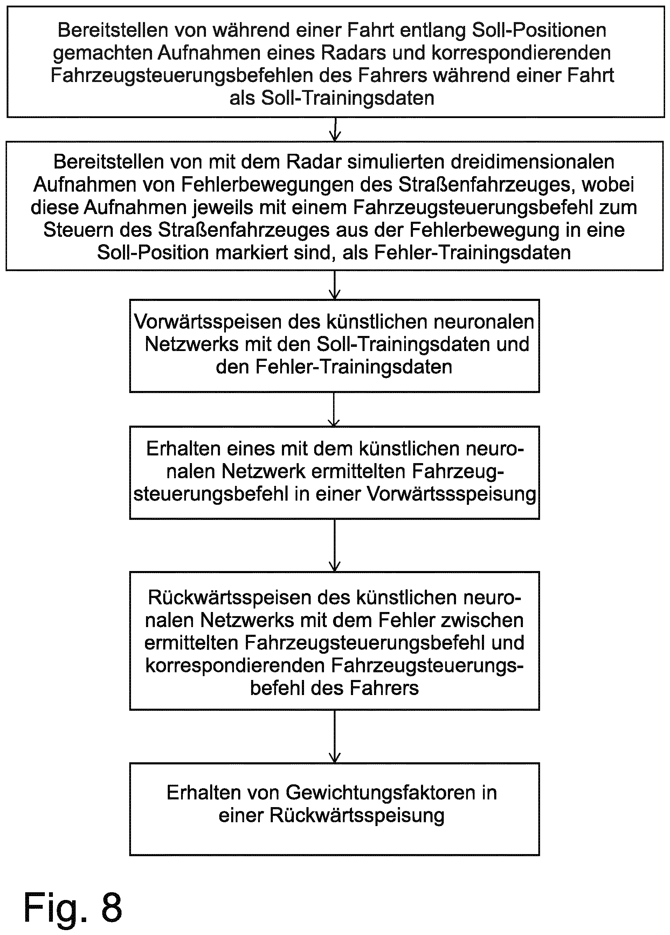

In dem in Fig. 8 gezeigten Verfahren zum Trainieren eines künstlichen neuronalen Netzwerks 24 wird das künstliche neuronale Netzwerk 24 auf einem Trainingssystem 20 zur Fahrzeugregelung ausgeführt. In einem ersten Schritt werden während einer Fahrt entlang Soll-Positionen 4 gemachte Aufnahmen eines Radars 10 und korrespondierende Fahrzeugsteuerungsbefehlen 9 des Fahrers während einer Fahrt als Soll-Trainingsdaten 22 bereitgestellt. Zum Beispiel kann einem Fahrer aufgetragen worden sein, mit einem Straßenfahrzeug 1 auf Straßen durch Europa entlang Soll-Positionen zu fahren. Ein an diesem Straßenfahrzeug 1 angeordneter Radar 10 macht dann während dieser Fahrt Aufnahmen. In einem zweiten Schritt werden von mit dem Radar 10 simulierten dreidimensionalen Aufnahmen von Fehlerbewegungen 3 des Straßenfahrzeuges 1, wobei diese Aufnahmen jeweils mit einem Fahrzeugsteuerungsbefehl 9 zum Steuern des Straßenfahrzeuges 1 aus der Fehlerbewegung 3 in eine Soll-Position 4 markiert sind, als Fehler-Trainingsdaten 23 bereitgestellt. Anschließend wird das künstliche neuronale Netzwerk 24 mit den Soll-Trainingsdaten 22 und den Fehler-Trainingsdaten 23 vorwärtsgespeist. Daraufhin wird ein mit dem künstlichen neuronalen Netzwerk 24 ermittelter Fahrzeugsteuerungsbefehl 9 in einer Vorwärtsspeisung erhalten. Im nächsten Schritt wird das künstliche neuronale Netzwerk mit dem Fehler zwischen ermittelten Fahrzeugsteuerungsbefehl 9 und korrespondierenden Fahrzeugsteuerungsbefehl 9 des Fahrers vorwärtsgespeist. Schließlich werden Gewichtungsfaktoren 25 in einer Rückwärtsspeisung erhalten.

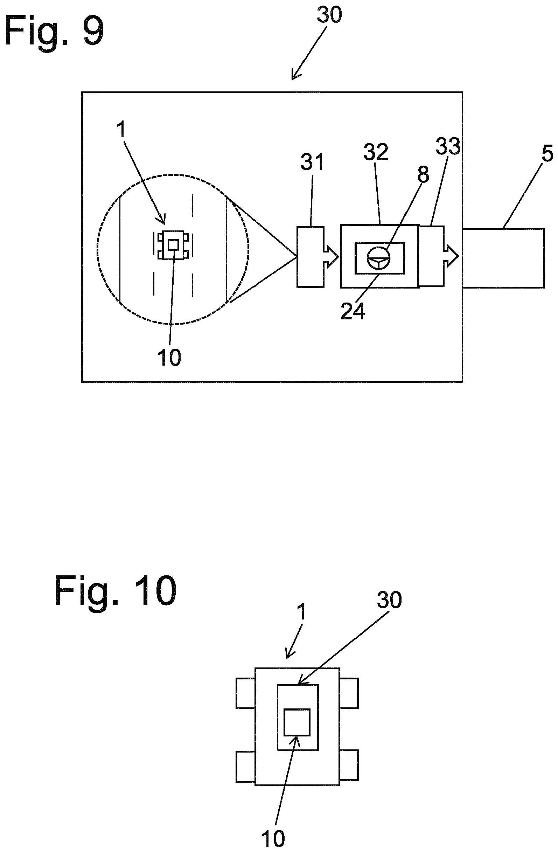

Das Einsatzsystem 30 der Fig. 9 weist eine Eingangsschnittstelle 31 auf, die Radaraufnahmen eines an einem Fahrzeug 10 angeordneten Radars während einer Fahrt mit dem Straßenfahrzeug 1 in eine Auswerteeinrichtung 32 des Einsatzsystems 30 eingibt. Mittels einem trainierten künstlichen neuronalen Netzwerks 24 bestimmt die Auswerteeinrichtung 32 anhand der aus der Radaraufnahme erhaltenen Straße und deren Verlauf durch die Position des Straßenfahrzeugs 1 oder aus den lokalen Reflektionen neben dem Fahrzeug einen Fahrzeugsteuerungsbefehl 8. Dieser Fahrzeugsteuerungsbefehl 8 wird über eine Ausgangsschnittstelle 33 an einer Fahrzeugregelungseinrichtung 5 ausgegeben. Damit ist ein automatischer Betrieb eines Fahrzeuges mit einer End to end Lösung und Drive by Wire möglich.

Fig. 10 zeigt das Straßenfahrzeug 1 mit einem Radar 10 und einem Einsatzsystem 30. Das künstliche neuronale Netzwerk 24 ist in der Lage, die Straße und deren Verlauf durch die Position der Fahrzeuge oder aus den lokalen Radarreflektionen neben den Fahrzeugen zu prädizieren.

Bezugszeichen

| 1 | Straßenfahrzeug |
|---|---|
| 2 | Referenzobjekt |
| 3 | Fehlerbewegung |
| 4 | Soll-Position |
| 5 | Fahrzeugregelungseinrichtung |
| 6 | Fahrbahn |
| 7 | Fehler |
| 8 | Fahrzeugsteuerungsbefehl |
| 9 | Fahrzeugsteuerungsbefehl |
| 10 | Radar |
| 11 | Anordnung |
| 12 | Empfangsantenne |
| 13 | Empfangssignal |
| 14 | Sendesignal |
| 15 | Auswerteeinrichtung |
| 16 | Zielsignal |

| 17 | Winkel |
| --- | --- |
| 18 | Zielobjekt |
| 19 | Umgebungskarte |
| 191 | erste Umgebungskarte |
| 192 | zweite Umgebungskarte |
| 20 | Trainingssystem |
| 201 | erste Eingangsschnittstelle |
| 202 | zweite Eingangsschnittstelle |
| 22 | Soll-Trainingsdaten |
| 23 | Fehler-Trainingsdaten |
| 24 | künstliches neuronales Netzwerk |
| 25 | Gewichtungsfaktoren |
| 30 | Einsatzsystem |
| 31 | Eingangsschnittstelle |
| 32 | Auswerteeinrichtung |
| 33 | Ausgangsschnittstelle |
| dR | Abstand |
| d1 | erster Abstand |
| d2 | zweiter Abstand |
| dA | Antennenabstand |
| dS | Laufzeitunterschied |
| Θ | Winkel |

**Patentansprüche**

1. Radar (10) zur Simulation einer Bewegung eines Straßenfahrzeuges (1) mit

   - einer Anordnung (11) von Empfangsantennen (12), die ausgeführt sind, Empfangssignale (13) eines mit Sendesignalen (14) angestrahlten Referenzobjekts (2) zu empfangen, und
   - einer Auswerteeinrichtung (15), die ausgeführt ist,

   • anhand eines Vergleichs der Empfangssignale (13) und der Sendesignale (14) den Abstand (dR) des Referenzobjekts (2) zu dem Radar (10) zu erhalten und
   • anhand von mit den Empfangsantennen (12) empfangenen Zielsignalen (16) Winkel (17) zwischen Zielobjekten (18), die in dem Abstand (dR) zu dem Radar (10) angeordnet sind, und dem Radar (10) zu bestimmen und anhand dieser Winkel (17) eine Umgebungskarte (19) zu erhalten,

   - wobei die Auswerteeinrichtung (15) ausgeführt ist, eine Bewegung des Straßenfahrzeuges (1) durch eine Koordinatentransformation dieser Umgebungskarte (19) zu simulieren.

2. Radar (10) nach Anspruch 1, **dadurch gekennzeichnet, dass** die Anordnung (11) der Empfangsantennen (12) eine mehrdimensionale Anordnung (11) ist und dass die Auswerteeinrichtung (15) ausgeführt ist, Azimut- und Elevationswinkel (17) von Zielobjekten (18), die in dem Abstand (dR) zu dem Radar (10) angeordnet sind, zu bestimmen, wobei die Umgebungskarte (19) eine Azimut- und Elevationskarte ist.

3. Radar (10) nach Anspruch 2, **dadurch gekennzeichnet, dass** die Auswerteeinrichtung (15) ausgeführt ist, eine Rotation des Straßenfahrzeuges (1) durch eine Rotation der Umgebungskarte (19) mittels einer Änderung in Azimut- und/oder Elevationswinkel (17) zu simulieren.

4. Radar (10) nach einem der vorangehenden Ansprüche, **dadurch gekennzeichnet, dass** die Auswerteeinrichtung (15) ausgeführt ist, mittels Beamforming Winkel (17) von Zielobjekten (18) zu bestimmen.

5. Radar (10) nach einem der vorangehenden Ansprüche, **dadurch gekennzeichnet, dass** die Auswerteeinrichtung (15) ausgeführt ist, Abstände (d) mehrerer Referenzobjekte (2) zu dem Radar (10) zu erhalten und für jeden dieser Abstände (d) eine Umgebungskarte (19) zu erhalten.

6. Radar (10) nach Anspruch 5, **dadurch gekennzeichnet, dass** die Auswerteeinrichtung (15) ausgeführt ist, eine Translation des Straßenfahrzeuges (1) durch eine Translation aus einer ersten Umgebungskarte (191) zu einem ersten Abstand (d1) in eine zweite Umgebungskarte (192) zu einem zweiten Abstand (d2) zu simulieren.

7. Radar (10) nach einem vorangehenden Ansprüche, **dadurch gekennzeichnet, dass** die Auswerteeinrichtung (15) ausgeführt ist, anhand eines Vergleichs der Empfangssignale (13) und der Sendesignale (14) die Relativgeschwindigkeit eines Referenzobjekts (2) und/oder eines Zielobjekts (18) im Ruhesystem des Radars (10) zu erhalten.

8. Radar (10) nach einem der vorangehenden Ansprüche, **dadurch gekennzeichnet, dass** die Auswerteinrichtung (15) ausgeführt ist, eine Fehlerbewegung (3) des Stra-ßenfahrzeuges (1) zu simulieren.

9. Radar (10) nach einem der Ansprüche 1 bis 8, **dadurch gekennzeichnet, dass** der Radar (10) ein Frequenz modulierter Dauerstrichradar ist, der vorzugsweise an das Straßenfahrzeug (1) anordenbarer ist.

10. Verfahren zur Simulation einer Bewegung eines Straßenfahrzeuges (1), wobei zur Durchführung des Verfahrens ein Radar (10) nach einem der Ansprüche 1 bis 9 verwendet wird, mit den folgenden Verfahrensschritten:

a) Bereitstellen von Empfangssignalen (13) eines mit Sendesignalen (14) angestrahlten Referenzobjekts (2),

b) Erhalten des Abstandes (dR) des Referenzobjekts (2) zu dem Radar (10) anhand eines Vergleichs der Empfangssignale (13) und der Sendesignale (14),

c) Bestimmen von Winkeln (17) von Zielobjekten (18), die in dem Abstand (dR) zu dem Radar (10) angeordnet sind,

d) Erhalten einer Umgebungskarte (19) anhand dieser Winkel (17) und

e) Simulation einer Bewegung des Straßenfahrzeuges (1) durch eine Koordinatentransformation dieser Umgebungskarte (19).

11. Trainingssystem (20) für eine Fahrzeugregelung

- mit einer ersten Eingangsschnittstelle (201), um Soll-Trainingsdaten (22),

- mit einer zweiten Eingangsschnittstelle (202), um Fehler-Trainingsdaten (23) zu erhalten, wobei

- die Soll-Trainingsdaten (22) Aufnahmen eines Radars (10) und korrespondierende Fahrzeugsteuerungsbefehle (9) des Fahrers während einer Fahrt entlang Soll-Positionen (4) sind,

- die Fehler-Trainingsdaten (23) mit dem Radar (10) simulierte dreidimensionale Aufnahmen von Fehlerbewegungen (3) des Straßenfahrzeuges (1) sind, wobei diese Aufnahmen jeweils mit einem simulierten Fahrzeugsteuerungsbefehl (9) zum Steuern des Straßenfahrzeuges (1) aus der Fehlerbewegung (3) in eine Soll-Position (4) markiert sind, und wobei

- das Trainingssystem (20) ausgeführt ist,

• ein künstliches neuronales Netzwerk (24) mit den Soll-Trainingsdaten (22) und den Fehler-Trainingsdaten (23) vorwärts zu speisen und in einer Vorwärtsspeisung einen mit dem künstlichen neuronalen Netzwerk (24) ermittelten Fahrzeugsteuerungsbefehl (8) zu erhalten, und

• Gewichtungsfaktoren (25) durch Rückwärtsspeisen des künstlichen neuronalen Netzwerks (24) mit dem Fehler (7) zwischen ermittelten Fahrzeugsteuerungsbefehl (8) und korrespondierenden Fahrzeugsteuerungsbefehl (9) des Fahrers zu erhalten.

12. Trainingssystem (20) nach Anspruch 11, **dadurch gekennzeichnet, dass** das Trainingssystem (20) einen Radar (10) aufweist, vorzugsweise einen Radar (10) nach einem der Ansprüche 1 bis 9.

13. Trainingssystem (20) nach einem der Ansprüche 11 oder 12, **dadurch gekennzeichnet, dass** mit dem Trainingssystem (20) eine Spurführung des Straßenfahrzeuges (1), insbesondere auf einer mehrspurigen Fahrbahn (6), erfolgt.

14. Trainingssystem (20) nach Anspruch 13, **dadurch gekennzeichnet, dass** das Trainingssystem (20) ausgeführt ist, Spurwechsel als Soll-Trainingsdaten (22) zu ignorieren.

15. Trainingssystem (20) nach einem der Ansprüche 13 oder 14, **dadurch gekennzeichnet, dass** das Trainingssystem (20) Spurwechsel durch Auswerten von Blinkersignalen des Straßenfahrzeuges (1) und/oder anhand einer Spurerkennungseinrichtung erkennt.

16. Verfahren zum Trainieren eines künstlichen neuronalen Netzwerks (24), wobei das künstliche neuronale Netzwerk (24) auf einem Trainingssystem (20) zur Fahrzeugregelung ausgeführt wird, mit den folgenden Verfahrensschritten:

a) Bereitstellen von während einer Fahrt entlang Soll-Positionen (4) gemachten Aufnahmen eines Radars (10) und korrespondierenden Fahrzeugsteuerungsbefehlen (9) des Fahrers während einer Fahrt als Soll-Trainingsdaten (22),

b) Bereitstellen von mit dem Radar (10) simulierten dreidimensionalen Aufnahmen von Fehlerbewegungen (3) des Straßenfahrzeuges (1), wobei diese Aufnahmen jeweils mit einem Fahrzeugsteuerungsbefehl (9) zum Steuern des Straßenfahrzeuges (1) aus der Fehlerbewegung (3) in eine Soll-Position (4) markiert sind, als Fehler-Trainingsdaten (23),

c) Vorwärtsspeisen des künstlichen neuronalen Netzwerks (24) mit den Soll-Trainingsdaten (22) und den Fehler-Trainingsdaten (23),

d) Erhalten eines mit dem künstlichen neuronalen Netzwerk (24) ermittelten Fahrzeugsteuerungsbefehl (9) in einer Vorwärtsspeisung,

e) Rückwärtsspeisen des künstlichen neuronalen Netzwerks mit dem Fehler zwischen ermittelten Fahrzeugsteuerungsbefehl (9) und korrespondierenden Fahrzeugsteuerungsbefehl (9) des Fahrers, und

f) Erhalten von Gewichtungsfaktoren (25) in einer Rückwärtsspeisung.

17. Verfahren nach Anspruch 16, **dadurch gekennzeichnet, dass** zur Durchführung des Verfahrens ein Trainingssystem (20) nach einem der Ansprüche 11 bis 14 verwendet wird.

18. Einsatzsystem (30) für eine Fahrzeugregelung, mit

- einer Eingangsschnittstelle (31), um Aufnahmen eines Radars (10) während einer Fahrt mit einem Straßenfahrzeug (1) zu erhalten,
- einer Auswerteeinrichtung (32), die ausgeführt ist, ein gemäß dem Verfahren nach Anspruch 16 oder 17 trainiertes künstliches neuronales Netzwerk (24) mit diesen Aufnahmen vorwärts zu speisen und Fahrzeugsteuerungsbefehle (8) zu erhalten, und
- einer Ausgangsschnittstelle (33), die ausgeführt ist, diese Fahrzeugsteuerungsbefehle (8) an eine Fahrzeugregelungseinrichtung (5) auszugeben.

19. Radar (10), vorzugsweise Radar nach einem der Ansprüche 1 bis 9, mit einem Einsatzsystem (30) nach Anspruch 18.

# Fig. 1

# Fig. 2

# Fig. 3

## Fig. 4

## Fig. 5

Bereitstellen von Empfangssignalen
eines mit Sendesignalen angestrahlten
Referenzobjekts

Erhalten des Abstandes des
Referenzobjekts zu dem Radar

Bestimmen von Winkeln von
Zielobjekten, die in dem Abstand zu
dem Radar angeordnet sind

Erhalten einer Umgebungskarte

Simulation einer Bewegung des Straßenfahrzeuges
durch Koordinatentransformation der
Umgebungskarte

Fig. 6

Fig. 7

Bereitstellen von während einer Fahrt entlang Soll-Positionen gemachten Aufnahmen eines Radars und korrespondierenden Fahrzeugsteuerungsbefehlen des Fahrers während einer Fahrt als Soll-Trainingsdaten

Bereitstellen von mit dem Radar simulierten dreidimensionalen Aufnahmen von Fehlerbewegungen des Straßenfahrzeuges, wobei diese Aufnahmen jeweils mit einem Fahrzeugsteuerungsbefehl zum Steuern des Straßenfahrzeuges aus der Fehlerbewegung in eine Soll-Position markiert sind, als Fehler-Trainingsdaten

Vorwärtsspeisen des künstlichen neuronalen Netzwerks mit den Soll-Trainingsdaten und den Fehler-Trainingsdaten

Erhalten eines mit dem künstlichen neuro- nalen Netzwerk ermittelten Fahrzeug- steuerungsbefehl in einer Vorwärtsspeisung

Rückwärtsspeisen des künstlichen neuro- nalen Netzwerks mit dem Fehler zwischen ermittelten Fahrzeugsteuerungsbefehl und korrespondierenden Fahrzeugsteuerungs- befehl des Fahrers

Erhalten von Gewichtungsfaktoren in einer Rückwärtsspeisung

# Fig. 8

# Fig. 9

# Fig. 10